# EUROPEAN PATENT APPLICATION

(11) **EP 4 360 835 A1**
(43) Date of publication of application: **01.05.2024**
(21) Application number: 23201451.4
(22) Date of filing: 03.10.2023
(51) Int. Cl.: B27L 7/00, B27L 7/06

(54) **A LOG SPLITTER DEVICE AND A METHOD FOR SPLITTING A LOG**

(30) Priority: 20.10.2022 FI 20225953
(71) Applicant: KX-Treeshears Oy, 44150 Äänekoski (FI)
(72) Inventor: Tossavainen, Kimmo, 44250 Äänekoivisto (FI)
(74) Representative: Koivisto, Harri Kristian

(57) **Abstract**

A log splitter device is configured to be connected to a working machine's boom. The log splitter device has two operating positions, a log collecting position and a log splitting position. In the log collecting position, a wedge (2) and a pressure plate (3) are used for grabbing a log (10) from the ground. The articulating boom allows the wedge (2) and the pressure plate (3) to point downwards to enable lifting the log (10).

In the log splitting position the log splitter device is rotated. In the log splitting position the log (10) may stay in place by gravity as the log splitting device supports the log (10) from below. The log splitter device is configured to allow the split portion of the log (10) to fall though the device.

## Description

### BACKGROUND

A log splitter is typically used for splitting firewood from softwood or hardwood logs that have been pre-cut into sections. Splitting the log reduces the drying period of the firewood and may prevent it from rotting. A hydraulic pump or an electric motor powers a hydraulic or electrical actuator that pushes the wedge towards the pressure plate, causing the log to split.

Processing pre-cut logs and the split firewood often requires moving the wood from one place to another, from the log lying on the ground to the piles of firewood. Because the wood itself is heavy, several machines and devices are known to help the process. However, to complete the process many devices serve only one purpose. Alternatively, or in addition, the device itself may be very complicated and thus vulnerable to malfunctions.

Log splitters are known to be mounted onto a boom of a working machine, a backhoe or a tractor. In larger size such log splitters may not be nimble enough to grab any logs lying on the ground. With some known examples, the log splitter requires the log size to fit within a predetermined margin - otherwise the resulting firewood is not properly split or the resulting firewood may be too thick to be burned efficiently.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A log splitter device and a method for splitting a log with the device are disclosed hereinafter. The log splitter comprises a wedge and a pressure plate, wherein the log is split by placing it between the wedge and the pressure plate and driving the wedge into the log.

The log splitter device is configured to be connected to a working machine's articulating boom. The log splitter device has two operating positions, a log collecting position and a log splitting position. In the log collecting position, the wedge and the pressure plate are used for grabbing the log, in one example from the ground level. In the log collecting position the articulating boom allows the wedge and the pressure plate to point at any direction, typically the opening between the wedge and the pressure plate is directed downwards to enable lifting the log.

In the log splitting position the log splitter device is rotated to having said opening upwards. In the log splitting position the log may stay in place by gravity as the log splitting device supports the log from below. Further, in the log splitting position the wedge and the pressure plate are brought closer to each other, causing compression of the wedge to split the log. The log splitter device is configured to allow the split portion of the log to fall though the device. As the device is attached to the articulating boom, the falling split firewood may be positioned to a desired location: a pile of firewood or filling an open-top cage of firewood.

One embodiment of the log splitter device comprises a wedge design, wherein only predefined portion of the log is split during one splitting movement. The wedge comprises a horizontal portion that defines a maximum size of the log to be split during one splitting movement. The log is positioned longitudinally between the pressure plate and a retainer plate. The retainer plate keeps the log in place during an opening movement. When the horizontal portion of the wedge has slid from below the remaining portion of the log, to a fully open position, the remaining portion of the log falls between the wedge and the pressure plate for the next splitting movement. Large logs may be split by multiple consecutive splitting movements.

One example of the wedge is a box wedge, that comprises at least one vertical wedge blade below the horizontal portion. The wedge design may be selected according to desired firewood size.

In one exemplary embodiment, the box wedge log splitter is combined with the versatility of the working machine's articulating boom. Logs may be processed into firewood quickly, while the operator may sit in the cabin of the working machine. The rotatable log splitter enables using the reciprocating function between the wedge and the pressure plate upside down - when compared to traditional designs - and grab the log into the splitter using only the working machine's articulating boom. Flipping the log splitter device around enables it to be used as the box wedge splitter. The attachment to the articulating boom solves another problem of traditional box wedge designs - collecting the split firewood after processing and placing it into storage position. The log splitter device as disclosed herein enables collecting the logs and placing the firewood into storage position with one, simple device. The log splitter device processes successfully logs of various sizes, splitting smaller logs in one movement and repeating the splitting movement for larger logs.

Many of the attendant features will be more readily appreciated as they become better understood by reference to the following detailed description considered in connection with the accompanying drawings. The embodiments described below are not limited to implementations which solve any or all the disadvantages of known log splitter devices.

### BRIEF DESCRIPTION OF THE DRAWINGS

The present description will be better understood from the following detailed description read in light of the accompanying drawings, wherein
FIG. 1 illustrates schematically an isometric view of one exemplary embodiment of the log splitter device in a log splitting position;
FIG. 2 illustrates schematically an isometric view of the same log splitter device;
FIG. 3 illustrates schematically an isometric view of the log splitter device in a log collecting position;
FIG. 4 illustrates schematically an isometric view of the log splitter device during a closing movement;
FIG. 5a illustrates schematically a first view of a wedge;
FIG. 5b illustrates schematically a second view of the wedge;
FIG. 5c illustrates schematically a third view of the wedge;
FIG. 6a illustrates schematically a first view of a pressure plate;
FIG. 6b illustrates schematically a second view of the pressure plate;
FIG. 6c illustrates schematically a third view of the pressure plate;
FIG. 7a illustrates schematically a first view of a retainer plate;
FIG. 7b illustrates schematically a second view of the retainer plate; and
FIG. 7c illustrates schematically a third view of the retainer plate.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples are described and illustrated herein as being implemented in an log splitter device with the forestry machine, they are provided as an example and not a limitation. As those skilled in the art will appreciate, the present examples are suitable for application in a variety of heavy duty machinery.

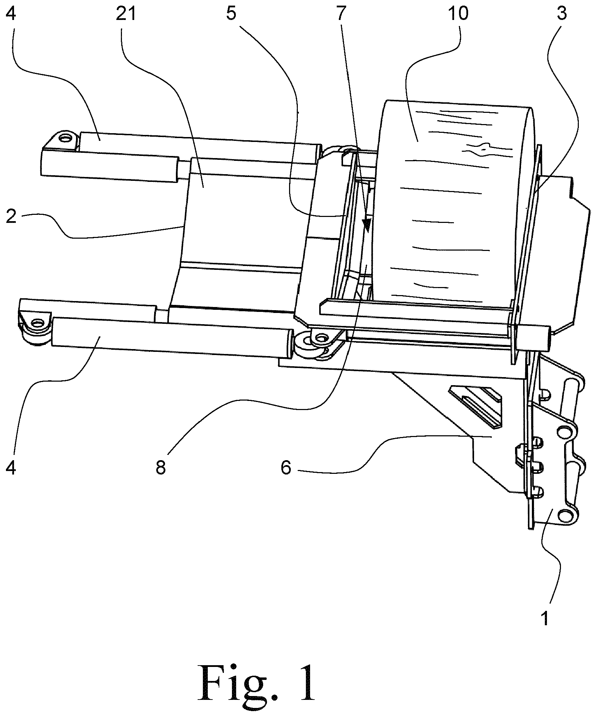

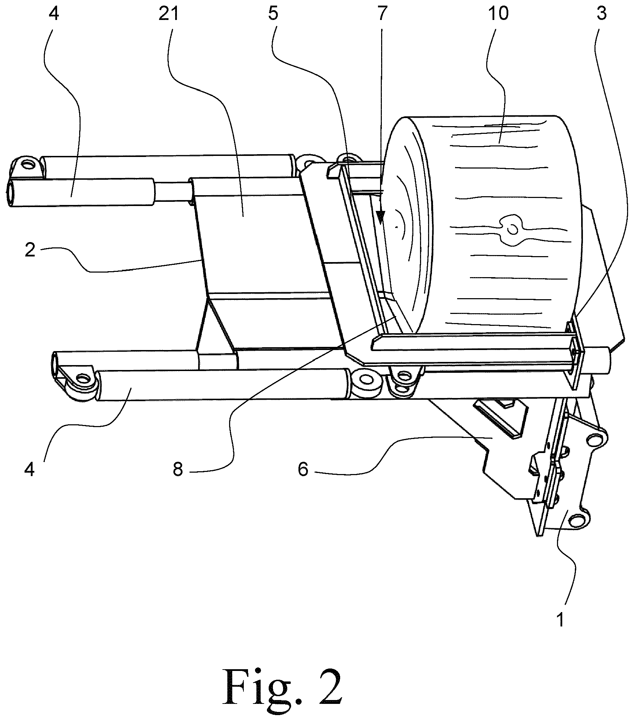

FIG. 1 illustrates schematically a first isometric view of one exemplary embodiment of a log splitter device in a log splitting position. FIG. 2 illustrates schematically a second isometric view of the same embodiment. The log splitter device comprises an attachment device 1 for connecting the log splitter device to an articulating boom of a working machine. Examples of the working machine are a forestry machine, an excavator or a tractor. The attachment device 1 is connected to a body frame 6. An actuator 4 is configured to provide a closing movement and an opening movement between the wedge 2 and the pressure plate 3. During the closing movement the wedge 2 and the pressure plate 3 approach each other. During the opening movement the wedge 2 and the pressure plate 3 move apart from each other. In this exemplary embodiment the actuator 4 is configured to move the pressure plate 3 towards the wedge 2. In an alternative embodiment the actuator 4 is configured to move the wedge 2 towards the pressure plate 3.

The wedge 2 and the pressure plate 3 define an opening 7 for receiving a log 10. The opening 7 is closed to one direction by a log tray 8. The log tray 8 is in this example V-shaped, wherein in the log splitting position gravity centralises the log 10 to the middle section of the log tray 8. In the log splitting position the opening 7 is directed upwards. In this context directions, such as up, down, horizontal, vertical, etc., are described in reference to the gravity and conventional working positions during log or wood processing. The log 10 is held in its place by the log tray 8, the pressure plate 3, the wedge 2 and/or a retainer plate 5.

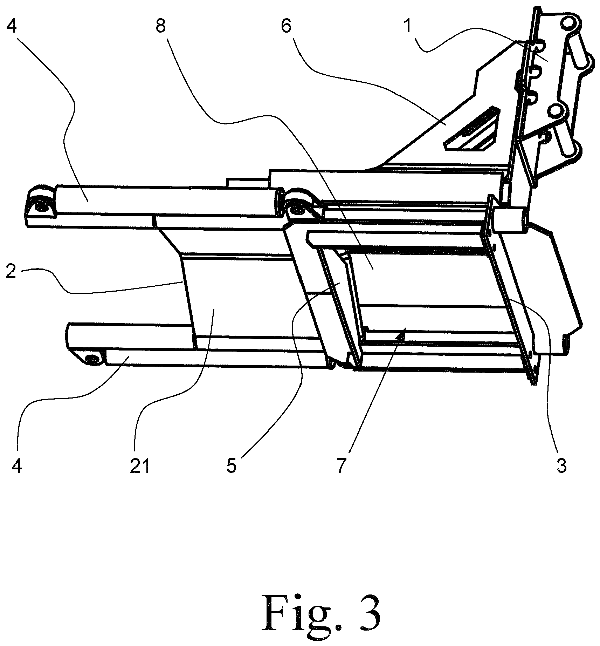

The log splitter device is configured to be used in two positions, a first position is the log splitting position as illustrated in FIG. 1 and FIG. 2. A second position is a log collecting position. FIG. 3 illustrates schematically an isometric view of the same embodiment in a log collecting position. In the log splitting position the opening 7 is directed upwards. In the log collecting position the opening 7 is directed downwards. Again, in this context the definitions of upwards or downwards allow significant variation. Logs 10 may be collected with the opening sideways or upwards, if the logs would be conveniently grabbed in those orientations. The fully articulating boom allows the log splitter device to be used at any position.

In the log collecting position the log 10 in grabbed between the wedge 2 and the pressure plate 3. The boom operator guides the log splitter device near the log 10. The log splitter device grabs the log 10 in the direction, where pre-cut surfaces of the log 10 meet the wedge 2 and the pressure plate 3. In some embodiments, the wedge 2 and the pressure plate 3 comprises extended fingers pointing downwards in the log collecting position for increased reach to the log 10. After grabbing the log 10, the boom operator may turn the log splitter device to log splitting position and slightly relief the pressure on the log 10, thereby allowing the gravity to centralise the log 10 on the log tray 8.

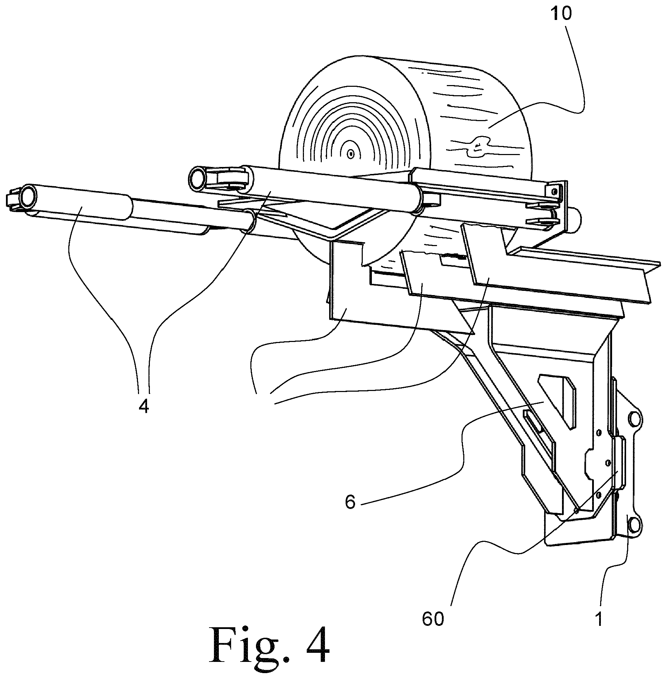

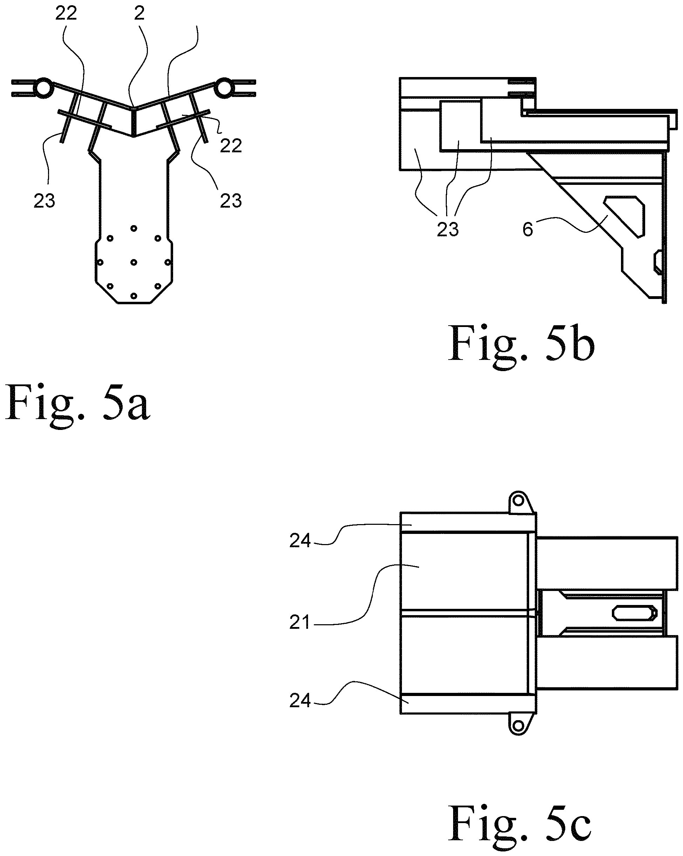

FIG. 4 illustrates schematically the log splitter device in the log splitting position and in the closing movement. In this example, the actuator 4 pushes the pressure plate 3 towards the wedge 2, forcing the wedge 2 on the end of the log 10. FIG. 5a, FIG. 5b and FIG. 5c illustrate schematically three views of the wedge 2 that is fixedly connected to the body frame 6. The wedge 2 comprises a horizontal portion 21 configured to define a first portion of the log 10 to be split during a closing movement. The horizontal portion 21 may be angled as in the present example. The closing movement causes the horizontal portion 21 to slice a bottom portion of the log 10, i.e the first portion of the log 10. The remaining portion, i.e. the second portion of the log 10 lies on top of the horizontal portion 21 at the end of the closing movement. At the end of the closing movement in the log splitting position, gravity causes a split first portion of the log 10 to fall through the log splitting device. The bottom portion of the log splitting device is designed to be free of obstacles to facilitate free fall of the split firewood. The boom operator may select a suitable position for the split firewood, for example a storage pile, a storage container, a transport container or a transport bed.

When the closing movement is complete, a reload movement begins. The actuator 4 pushes via the retainer plate 5 the second portion of the log 10 back to the log tray 8. The second portion of the log 10 slides off the horizontal portion 21 and falls completely to the log tray 8. The second portion of the log 10 centralises to the middle section of the log tray 8 by gravity. The boom operator may shake the boom and the log splitter device to further facilitate the centralising. The pressure plate 3 and the retainer plate 5, together with the push rods 30, form a rectangular shape that is configured to reciprocate over the wedge 2. The distance between the pressure plate 3 and the retainer plate 5 define the maximum length of the log 10.

The design allows larger logs 10 to be placed onto the log splitter device, while the resulting firewood is sufficiently small to fit into domestic fireplaces. In one embodiment, the wedge 2 is a box wedge. The box wedge comprises multiple sections 22 below the horizontal portion 21. Each section 22 defines the maximum size of the resulting split firewood that is processed through the log splitter device. In one embodiment, the wedge 2 comprises multiple blades 23 that are transversely to the horizontal portion 21. In one embodiment, the multiple blades 23 are staggered in relation to the pressure plate 3. The staggered blades 23 are illustrated in the side view of FIG. 5b. In one embodiment, the multiple blades 23 are radially angled. The distance between adjacent blades increases downwards, when the log splitter device is in the splitting position. This mitigates the risk of split wood getting stuck into the box wedge. In most cases, any amount of wood that could be stuck under the log splitter device will be freed during the following closing movement and the consecutive first portion that pushes the split firewood out of the wedge 2.

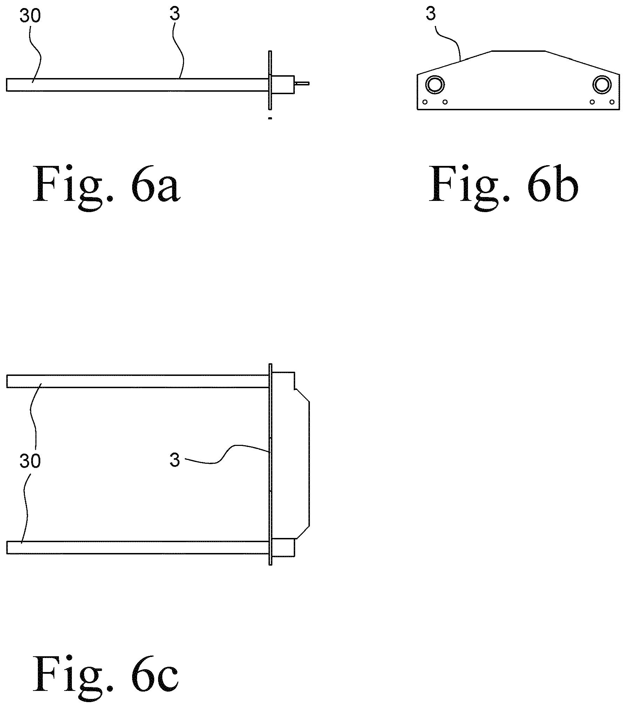

FIG. 6a, FIG. 6b and FIG. 6c illustrate schematically three views of the pressure plate 3. The pressure plate 3 comprises push rods 30, on which the pressure plate 3 reciprocates over the wedge 2. The push rods 30 are connected to actuators 4. In one embodiment, the actuator 4 comprises two hydraulic cylinders at opposite sides of the wedge 2. The push rods 30 are connected to two actuators 4. In one embodiment, the actuator 4 is an electric actuator.

The actuator 4 is in one embodiment split to both sides of the wedge 2 and to the reciprocating structure comprising the pressure plate 3 and the retainer plate 5. As the actuators 4 are positioned on the sides of the log splitter device, they do not hinder the fall of the split firewood. The two actuators exert similar force to both sides of the reciprocating structure, thereby reducing wear and mitigating the risk of jamming the log splitter device.

In one embodiment, the log splitter device is connected to the attachment device 1 by a rotatable pivot 60. The rotatable pivot 60 is configured to rotate the log splitter device between the log collecting position and the log splitting position. In this embodiment, the log splitter device provides the two operating positions even if the working device does not have fully articulating boom.

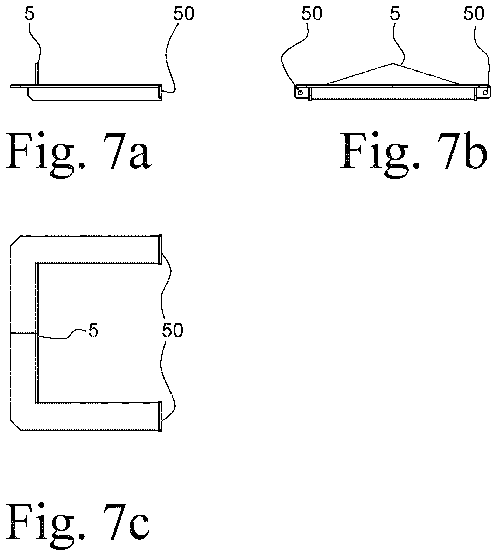

FIG. 7a, FIG. 7b and FIG. 7c illustrate schematically three views of the retainer plate 5. The retainer plate 5 is configured to be connected to the pressure plate 3. In one embodiment, upper slides 50 are used to connect the retainer plate 5 and the pressure plate 3. The retainer plate 5 comprises upper slides 50, on which the retainer plate 5 reciprocates over the wedge 2. The wedge 2 comprises slide surfaces 24, configured to support the retainer plate 5. In one embodiment, the retainer plate 5 and the upper slides 50 are configured to reciprocate on a rail structure arranged on the slide surfaces 24.

A log splitter device is disclosed herein. The device comprises an attachment device for connecting the log splitter device to a boom of a working machine; a wedge; a pressure plate; and an actuator configured to provide a closing movement and an opening movement between the wedge and the pressure plate; wherein when connected to the working machine, the log splitter device is configured to collect the log to an opening between the wedge and the pressure plate in a log collecting position. The log splitter device is configured to be used in two positions, the log collecting position and a log splitting position. In the log collecting position the opening between the wedge and the pressure plate is directed downwards and in the log splitting position said opening is directed upwards; the wedge comprises a horizontal portion configured to define a first portion of a log to be split during a closing movement. In the log splitting position, gravity causes a split first portion of the log to fall through the log splitting device. During the opening movement, a retainer plate is configured to retain a remaining portion of the log; and the gravity causes the remaining portion of the log to fall into said opening. In one embodiment, the wedge is a box wedge. In one embodiment, the wedge comprises multiple blades. In one embodiment, the multiple blades are staggered in relation to the pressure plate. In one embodiment, the multiple blades are radially angled, increasing the distance downwards in the splitting position. In one embodiment, the actuator comprises two hydraulic cylinders at opposite sides of the wedge. In one embodiment, the log splitter device is connected to the attachment device by a rotatable pivot, configured to rotate the log splitter device between the log collecting position and the log splitting position.

Alternatively, or in addition, a method for splitting a log by a log splitter device is disclosed herein. In the method, said log splitter device is connected by an attachment device to a boom of a working machine; and the method comprises collecting the log in a log collecting position by a closing movement between a wedge and a pressure plate; operating the log splitter device in two positions, the log collecting position and a log splitting position; directing, in the log collecting position, an opening between the wedge and the pressure plate downwards, directing, in the log splitting position, said opening upwards; splitting, during a closing movement, a first portion of the log by the wedge comprising a horizontal portion defining the first portion; allowing, in the log splitting position, a split first portion of the log to fall through the log splitting device; retaining, by a retainer plate, a second portion of the log during the opening movement; and allowing the remaining portion of the log to fall into said opening. In one embodiment, the wedge is a box wedge. In one embodiment, the wedge comprises multiple blades. In one embodiment, the multiple blades are staggered in relation to the pressure plate. In one embodiment, the multiple blades are radially angled, increasing the distance downwards in the splitting position. In one embodiment, the actuator comprises two hydraulic cylinders at opposite sides of the wedge. In one embodiment, the method comprises rotating the log splitter device between the log collecting position and the log splitting position by a rotatable pivot being connected between the log splitter device and the attachment device.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A log splitter device, comprising:
an attachment device (1) for connecting the log splitter device to a boom of a working machine;
a wedge (2);
a pressure plate (3); and
an actuator (4) configured to provide a closing movement and an opening movement between the wedge (2) and the pressure plate (3); wherein
when connected to the working machine, the log splitter device is configured to collect a log (10) to an opening between the wedge (2) and the pressure plate (3) in a log collecting position,
**characterized in that**:
the log splitter device is configured to be used in two positions, the log collecting position and a log splitting position; and
in the log collecting position the opening (7) between the wedge (2) and the pressure plate (3) is directed downwards and in the log splitting position said opening (7) is directed upwards;
the wedge (2) comprises a horizontal portion (21) configured to define a first portion of the log (10) to be split during a closing movement;
in the log splitting position, gravity causes a split first portion of the log (10) to fall through the log splitting device;
during the opening movement, a retainer plate (5) is configured to retain a remaining portion of the log (10); and
the gravity causes the remaining portion of the log (10) to fall into said opening (7).

2. A log splitter device according to claim 1, **characterized in that** the wedge (2) is a box wedge.

3. A log splitter device according to claim 1 or claim 2, **characterized in that** the wedge (2) comprises multiple blades (23).

4. A log splitter device according to claim 3, **characterized in that** the multiple blades (23) are staggered in relation to the pressure plate (3).

5. A log splitter device according to claim 3 or claim 4, **characterized in that** the multiple blades (23) are radially angled, increasing the distance downwards in the splitting position.

6. A log splitter device according to any of the claims 1 to 5,
**characterized in that** the actuator (4) comprises two hydraulic cylinders at opposite sides of the wedge (2).

7. A log splitter device according to any of the claims 1 to 6,
**characterized in that** the log splitter device is connected to the attachment device (1) by a rotatable pivot (60), configured to rotate the log splitter device between the log collecting position and the log splitting position.

8. A method for splitting a log (10) by a log splitter device,
said log splitter device being connected by an attachment device (1) to a boom of a working machine; and
collecting the log (10) in a log collecting position by a closing movement between a wedge (2) and a pressure plate (3),
**characterized by**:
operating the log splitter device in two positions, the log collecting position and a log splitting position;
directing, in the log collecting position, an opening (7) between the wedge (2) and the pressure plate (3) downwards,
directing, in the log splitting position, said opening (7) upwards;
splitting, during a closing movement, a first portion of the log (10) by the wedge (2) comprising a horizontal portion (21) defining the first portion;
allowing, in a log splitting position, a split first portion of the log (10) to fall through the log splitting device;
retaining, by a retainer plate (5), a second portion of the log (10) during the opening movement; and
allowing the remaining portion of the log (10) to fall into said opening (7).

9. A method according to claim 8, **characterized in that** the wedge (2) is a box wedge.

10. A method according to claim 8 or claim 9, **characterized by** the wedge (2) comprising multiple blades (23).

11. A method according to claim 10, **characterized in that** the multiple blades (23) are staggered in relation to the pressure plate (3).

12. A method according to claim 10 or claim 11, **characterized in that** the multiple blades (23) are radially angled, increasing the distance downwards in the splitting position.

13. A method according to any of the claims 8 to 12, **characterized in that** the actuator (4) comprises two hydraulic cylinders at opposite sides of the wedge (2).

14. A method according to any of the claims 8 to 13, **characterized by** rotating the log splitter device between the log collecting position and the log splitting position by a rotatable pivot (60) being connected between the log splitter device and the attachment device (1).
